# FASCICULE DE BREVET EUROPEEN

(11) **EP 0 882 951 B1**
(45) Date de publication et mention de la délivrance du brevet: **23.07.2008**
(21) Numéro de dépôt: 98201811.1
(22) Date de dépôt: 29.05.1998
(51) Int. Cl.: G01F 1/32

(54) **Compteur de fluide d'encombrement réduit**
Flüssigkeitsströmungsmesser mit reduzierten Abmessungen
Flowmeter with reduced dimensions

(30) Priorité: 06.06.1997 FR 9707058
(43) Date de publication de la demande: 09.12.1998
(73) Titulaire: Actaris S.A.S., 92100 Boulogne-Billancourt (FR)
(72) Inventeur: Guizot, Jean-Luc, 94220 Charenton le Pont (FR); Hernoux, Luc, 92700 Colombes (FR); Parry, Andrew John, 92340 Bourg la Reine (FR)
(74) Mandataire: Feray, Valérie

(56) Documents cités:
- EP-A- 0 306 193
- WO-A-95/35448
- H.J. SCHNEIDER: "ACHEMA '79: BETRIEBSMESSGERÄTE UND MESSUMFORMER" REGELUNGS TECHNISCHE PRAXIS, vol. 21, no. 9, septembre 1979, pages 241-249, XP002056635

## Description

L'invention est relative à un compteur de fluide comprenant un corps comportant une ouverture d'amenée et une ouverture d'évacuation de fluide alignées selon une première direction, une unité de mesure constituée d'un oscillateur fluidique qui comprend au moins un obstacle disposé dans une chambre dite d'oscillation pourvue d'une entrée et d'une sortie pour le fluide

Ce type de compteurs de fluide est largement connu et est décrit dans le document JP 0903303-A ou dans le document H.J. Schneider, "ACHEMA'79: Betrebsmessgeräte und Messumformer", Regelungs Technische Praxis vol. 21, no. 9 septembre 1979, pages 241-249. Plus particulièrement, document JP 09033303-A en fournit un exemple qui est représenté à la figure 1.

Dans ce compteur 1, le fluide entre par l'ouverture d'amenée 2, selon une direction longitudinale donnée, dans une première chambre 3 de grandes dimensions qui ralentit l'écoulement de fluide. Le fluide pénètre ensuite selon cette même direction dans une fente 5, par une extrémité 5a de celle-ci, qui est allongée suivant ladite direction et possède une dimension transversale (largeur) réduite. La fente est également allongée suivant l'autre dimension transversale (hauteur) qui est perpendiculaire à la largeur

A l'extrémité opposée 5b de la fente le fluide se présente sous la forme d'un jet qui entre dans une deuxième chambre 7 dite d'oscillation dans laquelle un obstacle 9 est positionné en regard de la fente.

Par suite d'instabilités naturelles le fluide oscille transversalement par rapport à la direction longinidinale en rencontrant l'obstacle et s'écoule alternativement à gauche et à droite de l'obstacle pour sortir de la chambre d'oscillation et du compteur suivant ladite direction longitudinale.

Ce type de compteurs présente toutefois un encombrement élevé ce qui représente un réel problème lorsque les dimensions disponibles pour l'installation des compteurs sur les canalisations sont réduites.

La présente invention a pour but de remédier à ce problème en proposant un compteur de fluide selon la revendication.

Dans cette configuration, la dimension longitudinale importante du compteur entre l'entrée et la sortie de l'oscillateur fluidiqueest conservée mais dans un plan perpendiculaire à la première direction d'alignement des ouvertures d'amenée et d'évacuation du fluide.

Selon une caractéristique de l'invention, le corps comporte une première et une deuxième parois opposées qui délimitent partiellement la chambre d'oscillation.

Selon une autre caractéristique, la première paroi dite de déflection est située en regard de l'ouverture d'amenée de fluide de manière à donner au fluide une direction sensiblement perpendiculaire à la première direction et un sens opposé à celui du fluide circulant dans l'oscillateur fluidique.

Selon encore d'autres caractéristiques :
- le corps comporte un ou plusieurs passages qui dirigent le fluide défléchi par la première paroi selon la deuxième direction vers l'entrée de l'oscillateur fluidique,
- le corps comporte un ou plusieurs passages en sortie de l'oscillateur fluidique qui dirigent le fluide selon une direction sensiblement perpendiculaire à la première direction et dans un sens opposé à celui du fluide circulant dans l'oscillateur fluidique,
- la deuxième paroi dite de guidage conduit le fluide vers l'ouverture d'évacuation,
- la deuxième paroi est située en regard de l'ouverture d'évacuation du fluide.

Il suffit qu'au moins l'une des première et deuxième parois puisse être rapportée sur l'unité de mesure l'autre pouvant être partie intégrante de l'unité de mesure, pour pouvoir installer l'obstacle dans la chambre d'oscillation et monter les capteurs d'écoulement sur ou dans la paroi rapportée.

Avantageusement, l'obstacle et l'entrée de l'oscillateur fluidique possèdent une forme allongée suivant une direction sensiblement perpendiculaire aux première et deuxième parois ce qui permet de monter facilement ledit obstacle dans la chambre d'oscillation en le positionnant sur la paroi opposée à celle qui va être rapportée.

En outre, cette disposition avantageuse permet de réduire davantage l'encombrement du compteur entre les ouvertures d'amenée et d'évacuation car la dimension de l'unité de mesure le long de la première direction correspond à la hauteur de l'obstacle et non à toute la largeur ou dimension transversale de la chambre d'oscillation.

Selon une caractéristique, le corps comporte deux parties latérales encadrant un bloc central incluant l'unité de mesure et étant chacune délimitée, d'une part, par l'une des première et deuxième parois et, d'autre part, par une paroi située en regard de ladite première ou deuxième paroi et dans laquelle est aménagée l'ouverture correspondante d'amenée et d'évacuation du fluide.

Lorsque les deux parties latérales sont rapportées sur le bloc central la fabrication du corps du compteur s'en trouve simplifiée.

Toutefois, s'il est nécessaire de réduire les coûts de fabrication, il est préférable que l'une seulement des parties latérales soit formée d'une seule pièce avec le bloc central, l'autre partie latérale étant rapportée sur le bloc central.

D'autres caractéristiques et avantages de l'invention apparaitront au cours de la description qui va suivre donnée uniquement à titre d'exemple, et faite en référence aux dessins annexés, sur lesquels :
- la figure 1 est une vue schématique en coupe longitudinale d'un compteur de fluide de l'art antérieur,
- la figure 2 est une vue en perspective d'un compteur de fluide selon l'invention,
- la figure 3 est une vue schématique simplifiée en coupe transversale du compteur de la figure 2,
- la figure 4 est une vue schématique partielle du compteur de la figure 3 suivant D-D,
- la figure 5 est une vue en perspective de l'intérieur de l'unité de mesure du compteur de la figure 2.
- la figure 6 est une vue en perspective de la partie latérale du compteur qui est rapportée sur l'unité de mesure représentée à la figure 5,
- la figure 7 est vue en coupe montrant la fabrication du bloc central incluant l'unité de mesure du compteur,
- la figure 8 est une vue d'une variante de réalisation de l'invention.

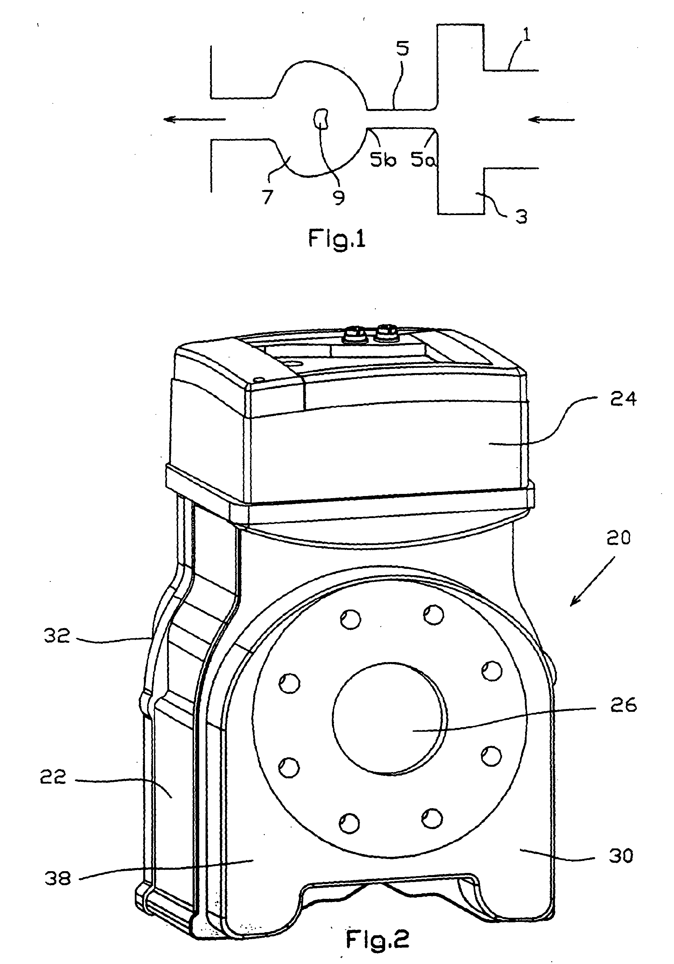

Comme représenté à la figure 2 et désigné par la référence générale notée 20 un compteur de gaz selon l'invention comprend un corps 22 sur lequel est monté un totalisateur 24.

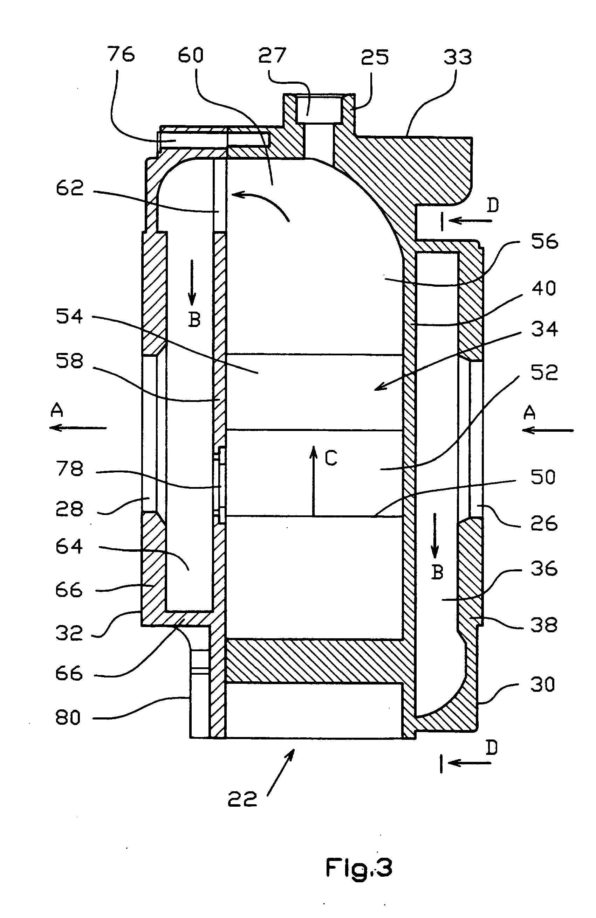

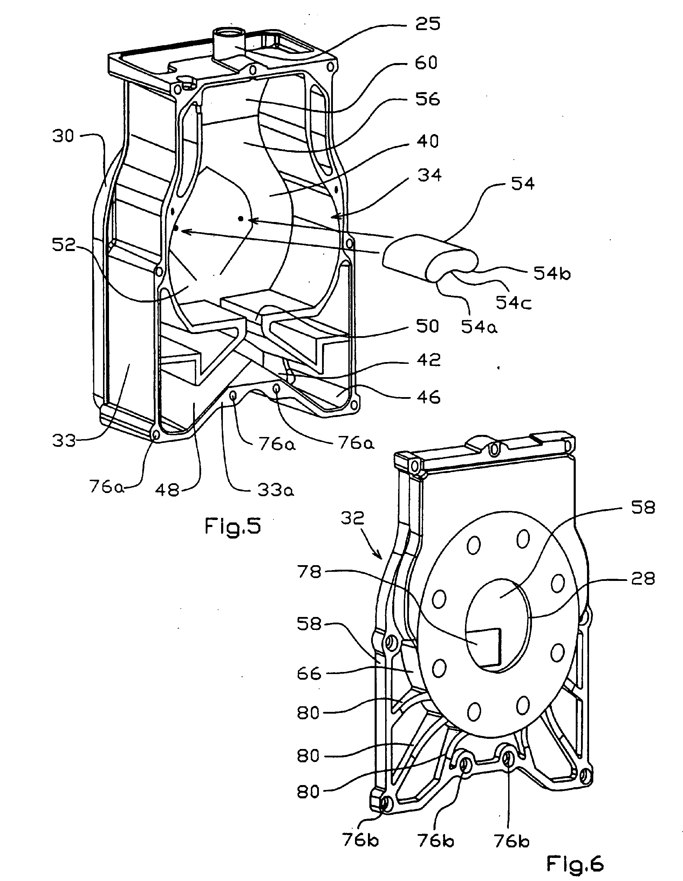

Sur les figures 3 et 5 un conduit 25 perforé d'un trou 27 est aménagé à la partie supérieure du corps 22 pour permettre le passage des connexions électriques entre ledit corps et le totalisateur 24.

Le corps comporte une ouverture 26 pour l'amenée du fluide dans le compteur selon une première direction repérée par la flèche notée A et qui sera par la suite référencée "direction A".

La figure 3 montre également une autre ouverture 28 pour l'évacuation du fluide hors du compteur et qui est alignée avec l'ouverture d'amenée 26 selon cette même direction A.

Le corps du compteur comporte deux parties latérales 30, 32 qui encadrent un bloc central 33 incluant une unité de mesure 34, ainsi que représenté sur la figure 3.

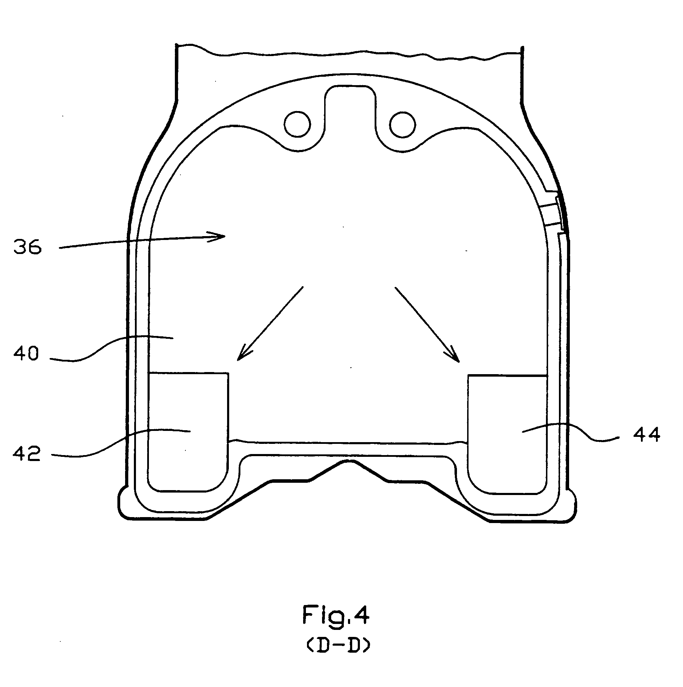

La partie latérale 30 définit à l'intérieur une chambre 36 dite amont représentée sur les figures 3 et 4 et dans laquelle le fluide s'introduit après être passé par l'ouverture d'amenée 26.

Cette chambre est délimitée par une paroi 38 dans laquelle l'ouverture 26 est aménagée et par une autre paroi 40 disposée en regard.

Cette paroi 40 appelée paroi de déflection reçoit l'impact de l'écoulement du fluide provenant de l'ouverture 26, fractionne celui-ci et le défléchit dans une direction descendante repérée par la flèche notée B sur la figure 3 et qui est sensiblement perpendiculaire à la première direction A.

La figure 4 montre l'intérieur de la chambre amont 36 et deux flèches dirigées vers deux orifices 42, 44 aménagés dans la paroi de déflection 40 indiquent la direction prise par l'écoulement fractionné.

Comme représenté sur la figure 5, deux passages 46,48 prolongent respectivement les orifices 42, 44 et dirigent les fractions d'écoulement de fluide en les faisant converger vers l'entrée 50 de l'unité de mesure 34. Cette entrée a la forme générale d'une fente allongée suivant la direction A.

A titre de variante, ces deux passages 46, 48 pourraient être remplacés par un seul passage prolongeant un seul orifice (au lieu des deux orifices 42,44) qui serait disposé par exemple entre les deux orifices actuels 42, 44.

Le fluide à l'entrée 50 de l'unité de mesure s'écoule dans un sens opposé à celui du fluide dans la chambre 36 (flèche B), selon la deuxième direction repérée par la flèche notée C sur la figure 3 et qui est perpendiculaire à la première direction A.

L'unité de mesure 34 comprend une chambre d'oscillation 52 (figs.3 et 5) dans laquelle un obstacle 54 est positionné suivant les deux flèches indiquées sur la figure 5 en vis-à-vis de l'entrée 50.

L'obstacle présente une forme générale allongée suivant la direction A.

L'obstacle possède dans sa partie frontale qui fait face à la fente 50 une cavité centrale 54a et deux faces latérales 54b, 54c convexes qui encadrent cette dernière.

Le fluide débouchant dans la chambre d'oscillation et rencontrant la partie frontale de l'obstacle 54, oscille transversalement par rapport à la direction C dans un plan parallèle à la paroi 40 et s'écoule alternativement de part et d'autre dudit obstacle pour quitter la chambre d'oscillation par la sortie 56 suivant cette direction C.

L'entrée 50 et la sortie 56 de la chambre d'oscillation sont alignées suivant la direction C qui est perpendiculaire à la direction A d'amenée et d'évacuation du fluide et l'encombrement du compteur entre ses ouvertures d'amenée 26 et d'évacuation 28 est ainsi fortement réduit.

Le compteur peut donc être placé au niveau de ses ouvertures d'amenée 26 et d'évacuation 28 entre deux canalisations plus rapprochées que dans l'art antérieur.

L'unité de mesure 34 a ainsi une forme générale allongée suivant la direction C qui pourrait prendre différentes orientations dans le plan perpendiculaire à la direction A.

La chambre d'oscillation 52 est délimitée ,d'une part,par la paroi 40 et, d'autre part, par une autre paroi 58 parallèle à ladite paroi 40 (figs.3 et 6).

Le fluide qui sort de la chambre d'oscillation emprunte le passage 60 qui forme un coude pour donner audit fluide la direction B.

Le passage 60 s'étend de part et d'autre de la paroi 58 dans laquelle un orifice 62 est prévu (fig.3).

A titre de variante, ce passage pourrait être remplacé par deux ou plus de deux passages.

Après avoir traversé l'orifice 62 le fluide pénètre dans une chambre 64 dite aval qui est aménagée à l'intérieur de l'autre partie latérale 32.

Cette chambre est délimitée par une paroi 66 dans laquelle l'ouverture d'évacuation 28 est aménagée et par la paroi 58 disposée en regard (fig.6). Une paroi périphérique 67 perpendiculaire à ces deux parois 58, 66 les relie.

La paroi 58 dite de guidage sert de guide au fluide circulant dans la chambre 64 jusqu'à sa sortie par l'ouverture d'évacuation 28 où il retrouve la direction d'écoulement A.

Ainsi que représenté sur les figures 2 à 6, la partie latérale 30 est fabriquée d'une seule pièce avec le bloc central 33 du corps 22 qui inclut l'unité de mesure 34 et l'autre partie latérale 32, fabriquée à part, est ensuite rapportée sur le bloc central de manière à faire office de couvercle.

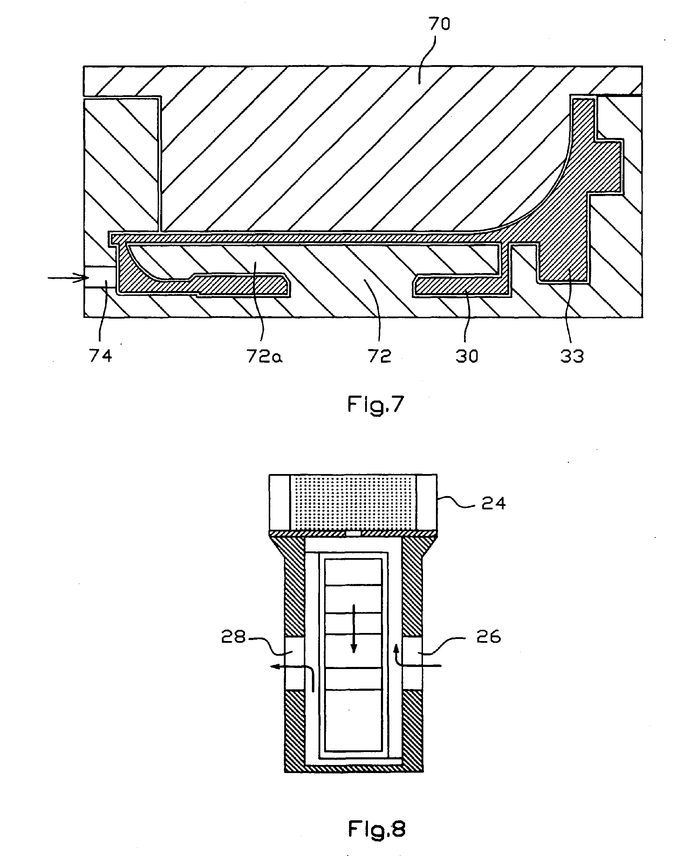

La fabrication de la partie latérale 30 intégrée au bloc central 33 du corps 22 est par exemple illustrée à la figure 7.

Sur cette figure deux pièces 70, 72 par exemple en sable synthétique compacté dans des boîtes en résine sont disposées l'une dans l'autre et leurs formes sont telles que l'espace intérieur défini entre elles reproduit exactement la forme de la partie latérale et du bloc central du corps.

Un trou 74 est prévu dans la partie externe de la pièce 72 afin d'y introduire de l'aluminium fondu qui va s'écouler par gravité dans l'espace intérieur entre les pièces et le remplir. Après avoir refroidi l'ensemble et l'avoir soumis à des vibrations afin de casser la portion non démoulable 72a de la pièce 72 la pièce formée de la partie latérale intégrée au bloc central du corps est obtenue.

Le nombre de pièces constitutives du corps étant réduit à deux, pour les assembler de manière étanche il ne faut usiner que deux faces, celle 33a (fig.5) du bloc central 33 sur laquelle va être fixée la partie latérale 32 et celle 32a (fig.3) de la partie latérale 32, et un seul joint d'étanchéité est nécessaire entre la partie latérale rapportée et le bloc central.

En outre, le nombre de vis de fixation à insérer dans les trous 76a,76b (figs.5 et 6) respectivement pratiqués dans le bloc central 33 et la partie latérale 32 est également limité par rapport à un compteur dans lequel deux couvercles sont rapportés.

Ceci permet avantageusement de réduire les coûts de fabrication.

Il serait possible de former tout le corps du compteur y compris l'obstacle 54 en une seule pièce par une technique analogue à celle exposée ci-dessus afin par exemple d'améliorer l'étanchéité du compteur, de supprimer l'usinage des faces à mettre en contact, et de réduire la main d'oeuvre d'assemblage, mais il est toutefois préférable de conserver deux pièces à assembler (corps et partie latérale) pour pouvoir mieux controler la qualité et la précision des formes de l'entrée 50 et de l'obstacle 54 dans la chambre d'oscillation.

Par ailleurs, sur les figures 3 et 6, une cavité 78 est pratiquée dans la paroi 58 afin de permettre l'installation dans celle-ci de capteurs d'écoulement non représentés (capteurs thermiques, capteurs de pression...) qui vont détecter les oscillations du fluide dans la chambre d'oscillation.

Pour pouvoir installer ces capteurs dans la cavité, il est donc préférable que la partie latérale 32 soit séparée du bloc central 33.

Toutefois, on pourrait prévoir que ce soit la partie latérale 30 qui soit séparée du bloc central et dans ce cas il serait préférable que la cavité 78 soit aménagée dans la paroi 40 afin de simplifier le montage des capteurs.

Lorque le compteur de gaz est en fonctionnement il véhicule du fluide sous une pression de plusieurs bars, aussi, afin d'éviter une déformation de la partie latérale 32, des nervures de renforcement 80 sont prévues sur celle-ci (fig.6). Ces nervures s'étendent sur la face extérieure de la paroi 58 entre la paroi 67 et la péripérie de ladite paroi 58.

La paroi latérale rapportée 32 peut également être constituée de plusieurs éléments au lieu d'être réalisée en un seul élément, un des éléments, la paroi 58, étant rapporté sur le bloc central, les autres étant rapportés sur la dite paroi 58.

Toutefois, cette solution est moins efficace du point de vue de l'étanchéité.

La figure 8 illustre une variante de réalisation dans laquelle le fluide qui pénètre dans la chambre amont par l'ouverture d'amenée 26 se dirige vers le haut en direction du totalisateur 24, est redirigé vers le bas à l'intérieur de l'oscillateur fluidique, sort de ce dernier par le bas et est ensuite redirigé vers le haut dans la chambre aval avant de quitter celle-ci par l'ouverture d'évacuation 28.

## Revendications

1. Compteur de fluide (20) comprenant un corps (22) comportant une ouverture d'amenée (26) et une ouverture d'évacuation (28) de fluide alignées selon une première direction (A), une unité de mesure (34) constituée d'un oscillateur fluidique qui comprend au moins un obstacle (54) disposé dans une chambre dite d'oscillation (52) et qui est pourvu d'une entrée (50) et d'une sortie (56) pour le fluide, **caractérisé en ce que** l'entrée, la sortie et l'obstacle de l'oscillateur fluidique sont alignés selon une deuxième direction (C) perpendiculaire à la première direction.

2. Compteur de fluide selon la revendication 1, dans lequel le corps comporte une première (40) et une deuxième (58) parois opposées qui délimitent partiellement la chambre d'oscillation.

3. Compteur de fluide selon la revendication 2, dans lequel la première paroi (40) dite de déflection est située en regard de l'ouverture d'amenée (26) de fluide de manière à donner au fluide une direction (B) perpendiculaire à la première direction et un sens opposé à celui du fluide circulant dans l'oscillateur fluidique.

4. Compteur de fluide selon la revendication 3, dans lequel le corps (22) comporte un ou plusieurs passages (46, 48) qui dirigent le fluide défléchi par la première paroi selon la deuxième direction (C) vers l'entrée (50) de l'oscillateur fluidique.

5. Compteur de fluide selon la revendication 4, dans lequel le corps (22) comporte un (62) ou plusieurs passages en sortie de l'oscillateur fluidique qui dirigent le fluide selon une direction perpendiculaire a la première direction et dans un sens opposé à celui du fluide circulant dans l'oscillateur fluidique

6. Compteur de fluide selon la revendication 5, dans lequel la deuxième paroi (58) dite de guidage conduit le fluide vers l'ouverture d'évacuation (28).

7. Compteur de fluide selon la revendication 6, dans lequel la deuxième paroi (58) est située en regard de l'ouverture d'évacuation (28) du fluide.

8. Compteur de fluide selon l'une des revendications 2 à 7, dans lequel au moins l'une des parois est rapportée sur l'unité de mesure (34).

9. Compteur de fluide selon l'une des revendications 2 à 8, dans lequel l'obstacle (54) et l'entrée (50) de l'oscillateur fluidique possèdent une forme allongée suivant ladite première direction (A).

10. Compteur de fluide selon l'une des revendications 2 à 9, dans lequel le corps comporte deux parties latérales (30, 32) encadrant un bloc central (33) incluant l'unité de mesure (34) et étant chacune délimitée, d'une part, par l'une des première (40) et deuxième (58) parois et, d'autre part, par une paroi (38, 66) située en regard de ladite première ou deuxième paroi et dans laquelle est aménagée l'ouverture correspondante d'amenée (26) et d'évacuation (28) du fluide.

11. Compteur de fluide selon la revendication 10, dans lequel l'une (30) des parties latérales est formée d'une seule pièce avec le bloc central (33), l'autre partie latérale (32) étant rapportée sur ledit bloc central.

12. Compteur de fluide selon la revendication 11, dans lequel la partie latérale (32) rapportée est formée d'une seule pièce.

13. Compteur de fluide selon la revendication 11 ou 12, dans lequel la partie latérale (32) rapportée comporte des nervures de renforcement (80) situées sur la face extérieure de ladite partie latérale.

## Claims

1. A fluid meter (20) comprising a body (22) including a fluid intake port (26) and a fluid discharge port (28) aligned along a first direction (A), a measuring unit (34) consisting of a fluidic oscillator which comprises at least one obstacle (54) positioned in said oscillation chamber (52) and which is provided with an inlet (50) and an outlet (56) for the fluid, **characterized in that** the inlet, the outlet and the obstacle of the fluidic oscillator are aligned along a second direction (C) perpendicular to the first direction.

2. The fluid meter according to claim 1, wherein the body includes first (40) and second (58) opposite walls which partly delimit the oscillation chamber.

3. The fluid meter according to claim 2, wherein the first so-called deflection wall (40) is located facing the fluid intake port (26) so as to give the fluid a direction (B) perpendicular to the first direction and an opposite direction to that of the fluid flowing in the fluidic oscillator.

4. The fluid meter according to claim 3, wherein the body (22) includes one or more passages (46, 48) which direct the fluid deflected by the first wall along the second direction (C) towards the inlet (50) of the fluidic oscillator.

5. The fluid meter according to claim 4, wherein the body (22) includes one (62) or more passages at the outlet of the fluidic oscillator which direct the fluid along a direction perpendicular to the first direction and in an opposite direction to that of the fluid flowing in the fluidic oscillator.

6. The fluid meter according to claim 5, wherein the second so-called guiding wall (58) leads the fluid towards the discharge port (28).

7. The fluid meter according to claim 6, wherein the second wall (58) is located facing the port (28) for discharging the fluid.

8. The fluid meter according to any of claims 2 to 7, wherein at least one of the walls is added onto the measuring unit (34).

9. The fluid meter according to any of claims 2 to 8, wherein the obstacle (54) and the inlet (50) of the fluidic oscillator have an elongated shape along said first direction (A).

10. The fluid meter according to any of claims 2 to 9, wherein the body includes two side portions (30, 32) surrounding a central block (33) including the measuring unit (34) and each being delimited by one of the first (40) and second (58) walls on the one hand, and by a wall (38, 66) located facing said first or second wall on the other hand and in which the corresponding fluid intake port (26) and fluid discharge port (28) are provided.

11. The fluid meter according to claim 10, wherein one (30) of the side portions is formed as a single piece with the central block (33), the other side portion (32) being added onto said central block.

12. The fluid meter according to claim 11, wherein the added-on side portion (32) is formed as a single piece.

13. The fluid meter according to claim 11 or 12, wherein the added-on side portion (32) includes strengthening ribs (80) located on the outer face of said side portion.

## Patentansprüche

1. Fluidzähler, einen Körper (22) umfassend, der eine Einlassöffnung (26) und eine Auslassöffnung (28) eines Fluids aufweist, die in einer ersten Richtung (A) ausgerichtet sind, eine Messeinheit (34), die aus einem Fluidoszillator besteht, der mindestens ein Hindernis (54) aufweist, das in einer als Oszillationskammer (52) bezeichneten Kammer angeordnet ist und die mit einem Eingang (50) und einem Ausgang (56) für das Fluid ausgestattet ist, **dadurch gekennzeichnet, dass** der Eingang, der Ausgang und das Hindernis des Fluidoszillators in einer zweiten Richtung (C) senkrecht zur ersten Richtung ausgerichtet sind.

2. Fluidzähler nach Anspruch 1, wobei der Körper eine erste (40) und eine zweite (58) Wand aufweist, die sich gegenüberliegen und die Oszillationskammer teilweise begrenzen.

3. Fluidzähler nach Anspruch 2, wobei die erste Ablenkungswand genannte Wand (40) gegenüber der Einlassöffnung (26) des Fluids angeordnet ist, um dem Fluid eine Richtung (B) senkrecht zur ersten Richtung und eine Richtung entgegengesetzt zur Richtung des Fluids, das im Fluidoszillator zirkuliert, zu geben.

4. Fluidzähler nach Anspruch 3, wobei der Körper (22) einen oder mehrere Durchlässe (46, 48) aufweist, die das durch die erste Wand abgelenkte Fluid gemäß der zweiten Richtung (C) zum Eingang (50) des Fluidoszillators lenken.

5. Fluidzähler nach Anspruch 4, wobei der Körper (22) einen (62) oder mehrere Durchlässe am Ausgang des Fluidoszillators aufweist, die das Fluid in eine Richtung senkrecht zur ersten Richtung und in eine entgegengesetzte Richtung zur Richtung des Fluids, das im Fluidoszillator zirkuliert, lenken.

6. Fluidzähler nach Anspruch 5, wobei die als Führungswand bezeichnete zweite Wand (58) das Fluid zur Auslassöffnung (28) lenkt.

7. Fluidzähler nach Anspruch 6, wobei sich die zweite Wand (58) gegenüber der Auslassöffnung (28) des Fluids befindet.

8. Fluidzähler nach einem der Ansprüche 2 bis 7, wobei mindestens eine der Wände an der Messeinheit (34) angesetzt ist.

9. Fluidzähler nach einem der Ansprüche 2 bis 8, wobei das Hindernis (54) und der Eingang (50) des Fluidoszillators eine längliche Form in der ersten Richtung (A) besitzen.

10. Fluidzähler nach einem der Ansprüche 2 bis 9, wobei der Körper zwei seitliche Abschnitte (30, 32) aufweist, die einen mittleren Block (33) umrahmen, der die Messeinheit (34) einschließt, wobei jeder Abschnitt auf einer Seite von einer der ersten (40) und zweiten (58) Wände begrenzt ist und auf der anderen Seite von einer Wand (38, 66), die sich gegenüber der ersten oder der zweiten Wand befindet und in der die entsprechende Einlass- (26) und Auslassöffnung (28) des Fluids eingearbeitet ist.

11. Fluidzähler nach Anspruch 10, wobei einer (30) der seitlichen Abschnitte in einem einzigen Stück mit dem mittleren Block (33) geformt ist, wobei der andere seitliche Abschnitt (32) an dem mittleren Block angesetzt ist.

12. Fluidzähler nach Anspruch 11, wobei der angesetzte seitliche Abschnitt (32) von einem einzigen Stück geformt wird.

13. Fluidzähler nach Anspruch 11 oder 12, wobei der angesetzte seitliche Abschnitt (32) Verstärkungsrippen (80) aufweist, die sich an der Außenseite des seitlichen Abschnitts befinden.
